# EUROPÄISCHE PATENTANMELDUNG

(11) **EP 3 690 320 A1**
(43) Veröffentlichungstag der Anmeldung: **05.08.2020**
(21) Anmeldenummer: 19218301.0
(22) Anmeldetag: 19.12.2019
(51) Int. Cl.: F24B 1/192, F24C 3/00, C03C 17/34

(54) **KAMINOFEN**

(30) Priorität: 01.02.2019 DE 102019102559
(71) Anmelder: Schott AG, 55122 Mainz (DE)
(72) Erfinder: Gabel, Dr. Falk, 65388 Schlangenbad (DE); Wölfinger, Matthias, 65830 Kriftel (DE)
(74) Vertreter: 2K Patentanwälte Blasberg Kewitz & Reichel

(57) **Zusammenfassung**

Kaminofen (1) zur Verbrennung von fossilen und/oder biogenen Brennstoffen, umfassend eine bis auf Lufteintrittsöffnungen und einen Anschluss an ein Ofenrohr geschlossene Brennkammer (10), wobei die Brennkammer (10) eine Mantelfläche aufweist, die zu mindestens 25 % aus einer oder mehreren transparenten Scheiben (11) gebildet ist, soll eine Verrußung insbesondere während der Anzünd- und Anbrandphase vermeiden. Dazu ist zumindest eine der Scheiben (11) auf ihrer Außenseite (50) mit einer Beschichtung (42) versehen, welche derart beschaffen ist, dass die integrale Intensität der Wärmestrahlung, die hinter der Scheibe außerhalb des Brennraumes gemessen werden kann, über die gesamte Fläche der Scheibe weniger als 50 %, bevorzugt weniger als 35 % der maximalen Wärmestrahlung beträgt, die von der Brennkammer des Kaminofens durch eine unbeschichtete Scheibe hindurch abgegeben werden kann.

## Beschreibung

Die Erfindung betrifft einen Kaminofen zur Verbrennung von fossilen und/oder biogenen Brennstoffen, umfassend eine bis auf Lufteintrittsöffnungen und einen Anschluss an ein Ofenrohr geschlossene Brennkammer, wobei die Brennkammer eine Mantelfläche aufweist, die zu mindestens 25 % aus einer Anzahl von transparenten Scheiben gebildet ist. Sie betrifft weiter die Verwendung einer Beschichtung.

Ein Kaminofen ist ein Ofen für fossile oder biogene Brennstoffe, der vor oder neben dem Schornstein steht, und mit einem Ofenrohr an diesen angeschlossen ist. Er ist von einem offenen Kamin insoweit zu unterscheiden, dass er eine bis auf Lufteintrittsöffnungen geschlossene Brennkammer aufweist und er meist nicht eingebaut ist - dies aber auch sein kann. Kaminöfen sind in der Regel aus Gusseisen oder Stahlblech gefertigt, was auch für die Ummantelung der Brennkammer gilt. Diese Ummantelung weist zudem in der Regel eine Tür zum Einlegen von Brennmaterial und zur Reinigung auf.

Feuerstätten wie die eingangs genannten Kaminöfen unterliegen heute zunehmend der Anforderung, dass sie einen möglichst großen Feuerraum mit einer exzellenten, d. h. uneingeschränkten und naturgetreuen Sichtbarkeit des Feuers, die während des gesamten Abbrandprozesses gewährleistet sein muss, aufweisen müssen. Dies resultiert aus der Tatsache, dass viele Nutzer einer solchen Feuerstätte diese vor allem aus Gründen der Gemütlichkeit, weniger aber für ein rein technisches Heizen einsetzen.

Konsequenterweise sind derartige Kaminöfen mit einem sehr hohen Anteil an hitze- und thermoschockbeständigen transparenten Schreiben ausgestattet, um die geforderte uneingeschränkte Sichtbarkeit des gesamten Feuerraumes und damit des Feuers zu gewährleisten. Oftmals wird durch zusätzliche Seitenscheiben die Einsicht in den Feuerraum noch weiter vergrößert. Dies geht soweit, dass bei modernen Kaminöfen mehr als 25 % der Mantelfläche der Brennkammer, d.h. der senkrecht stehenden Begrenzungsfläche der Brennkammer ohne Boden und Decke, aus einer Anzahl (d.h. einer oder mehrere) von transparenten Scheiben gebildet sind. Eine obere Grenze für die Verglasung wird lediglich durch die Stabilität der Brennkammerwand gegeben, da zur Stabilisierung in der Regel nicht-transparente, z.B. metallische Streben notwendig sind. Also Obergrenze für die Verglasung wird daher in der Regel ein Wert von 90 % der Mantelfläche anzunehmen sein.

Derartige großflächig transparente Kaminöfen und Feuerstätten weisen oftmals eine starke Verrußung der Scheiben auf, die vor allem in der Anzünd- und Anbrandphase auftritt. Dies ist eine Folge der anfänglich noch unzureichenden Durchwärmung des Feuerraums, wodurch die Verbrennung in diesen Phasen unvollständig abläuft. Eine adaptierte Einstellung von Primär-, Sekundär- und ggf. auch Tertiärluft reicht bei derart großflächig transparenten Brennkammern in der Regel nicht aus, um die dann entstehende Verrußung auf der Scheibenoberfläche weitestgehend zu reduzieren oder gar zu vermeiden.

Es ist daher Aufgabe der Erfindung, einen Kaminofen der eingangs genannten Art anzugeben, bei dem eine Verrußung insbesondere während der Anzünd- und Anbrandphase vermieden wird.

Diese Aufgabe wird erfindungsgemäß gelöst, indem zumindest eine der Scheiben auf ihrer Außenseite mit einer Beschichtung versehen ist, welche derart beschaffen ist, dass die integrale Intensität der Wärmestrahlung, die hinter der Scheibe außerhalb des Brennraumes gemessen werden kann, über die gesamte Fläche der Scheibe weniger als 50 %, bevorzugt weniger als 35 % der maximalen Wärmestrahlung beträgt, die von der Brennkammer des Kaminofens durch eine unbeschichtete Scheibe hindurch abgegeben werden kann.

Die Erfindung geht dabei von der Überlegung aus, dass eine Verrußung der Scheiben der Brennkammerwandung vermieden werden könnte, wenn die Temperatur innerhalb der Brennkammer insbesondere in der Anfangsphase des Brennvorganges erhöht werden könnte. Eine Verrußung entsteht nämlich vor allem in Temperaturbereichen unterhalb von 450°C. Hierbei wurde erkannt, dass das Problem der Verrußung bei großflächig transparenten Kaminöfen wie oben beschrieben insbesondere deshalb auftritt, weil die für eine solche Feuerstätte verwendeten Scheiben typischerweise eine Dicke von nur 2 bis 8 mm aufweisen, und daher ihren Werkstoffeigenschaften entsprechend nur geringfügig isolierend wirken.

Die Hauptabbrandphase setzt je nach Kaminofentyp ab Minute 10 bis Minute 20 ein und dauert ca. 20-30 Minuten an. In der Mitte der Hauptabbrandphase sind dann die maximalen Temperaturen erreicht. Bis die genannte Temperatur von 450°C somit sicher und optimalerweise an allen Stellen der Scheiben eines der eingangs beschriebenen Kaminöfen oder Feuerstätten erreicht wird, vergehen somit je nach Kaminofen oder Feuerstätte, je nach Beladung mit Brennstoff, je nach Luftzufuhr bis zu 35 Minuten. Anschließend ist ein vollständiger und vollflächiger Abbau der Verrußung nicht mehr sichergestellt, denn die Temperaturverteilung auf der Innenseite der verwendeten Scheiben ist in vielen oder sogar nahezu allen bekannten Fällen nicht homogen.

Überraschenderweise hat sich gezeigt, dass das Problem der Verrußung dadurch gelöst werden kann, dass eine Kaminsichtscheibe, vorzugsweise alle Scheiben des Kaminofens, auf der dem Brennraum abgewandten Oberfläche mit einer Beschichtung versehen sind, welche dazu führt, dass die integrale Intensität der Wärmestrahlung, die hinter der Scheibe außerhalb des Brennraumes gemessen werden kann, über die gesamte Fläche der Scheibe weniger als 50% der maximalen Wärmestrahlung beträgt, die von der Brennkammer des Kaminofens bzw. der Feuerstätte durch eine unbeschichtete Scheibe hindurch abgegeben werden kann. Die Messung der über die Scheibenfläche abgestrahlten Wärmeleistung erfolgt mit einem im IR-Wellenlängenbereich sensitiven Leistungsmessgerät (bspw. Firma Gentec-EO, Typ UP55N). Die Effizienz der Beschichtung, d.h. wieviel Prozent der Infrarot-Strahlung reflektiert werden, berechnet sich dabei aus dem Verhältnis der Wärmemenge, die von einer konstant eingestellten Heizquelle (bspw. Schwarzkörperstrahler) durch eine unbeschichtete Scheibe hindurch im Vergleich zu einer beschichteten Scheibe gemessen wird. Die Wärmemenge wird dabei mit dem o.g. Leistungsmessgerät in einem Abstand von 20 ± 2 cm zur Scheibenaußenseite aufgenommen, wobei die sensitive Fläche des Detektors so auf die Scheibenoberfläche ausgerichtet wird, dass die austretende Wärmestrahlung rechtwinklig auf die Detektorfläche auftrifft. Auf diese Weise werden die Messwerte während der konstanten und wohl definierten, aber ofentypabhängigen Hauptabbrandphase für einen Zeitraum von 15 Minuten erfasst. Das finale Ergebnis ermittelt sich für eine Abbranddauer aus der Mittelwertsbildung aller erfassten Messwerte während des angegebenen Zeitraums.

Die Aufgabe wird weiterhin gelöst durch die Verwendung einer Scheibe mit einer Beschichtung in einer Mantelfläche der Brennkammer eines Kaminofens zur Vermeidung von Verrußung, wobei die Scheibe auf ihrer Außenseite mit der Beschichtung versehen wurde, und wobei die Beschichtung derart beschaffen ist, dass die integrale Intensität der Wärmestrahlung, die hinter der Scheibe außerhalb des Brennraumes gemessen werden kann, über die gesamte Fläche der Scheibe weniger als 50 %, bevorzugt weniger als 35 % der maximalen Wärmestrahlung beträgt, die von der Brennkammer des Kaminofens durch eine unbeschichtete Scheibe hindurch abgegeben werden kann.

Wie oben beschrieben eignet sich die Verwendung einer an sich bekannten Infrarot reflektierenden Beschichtung auf der Außenseite der Scheibe eines Kaminofens überraschenderweise dazu, eine Verrußung insbesondere in der Anfangsphase des Brennvorganges zu vermeiden.

Noch größere Wirkung entfaltet die Beschichtung bei einem Ofen oder bei einer Verwendung in einem Ofen, wenn dessen Mantelfläche vorteilhafterweise zu mehr als 40 %, bevorzugt mehr als 50 %, besonders bevorzugt mehr als 60 % aus der Anzahl von transparenten Scheiben gebildet ist. Gerade derartige Öfen neigen noch stärker zur Verrußung, so dass die beschriebene Beschichtung hier besonders vorteilhaft ist.

Eine derartige, die Wärmestrahlung abschirmende Beschichtung umfasst vorteilhafterweise eine erste Schicht auf der Außenseite der Scheibe und eine zweite Schicht, welche auf der ersten Schicht aufgebracht ist. Dabei umfasst die erste Schicht vorteilhafterweise ein dotiertes transparentes leitfähiges Oxid (kurz: TCO) und die zweite Schicht ein röntgenamorphes Oxid oder Nitrid. In einer derartigen Kombination wirkt die erste TCO-Schicht Infrarot reflektierend und sorgt somit für den gewünschten, oben beschriebenen Effekt. Die zweite Schicht hingegen stabilisiert die erste Schicht dahingehend, dass diese außerordentlich temperaturstabil wird und ihre Wirkung bei hohen Temperaturen nicht verliert. Sie dient damit praktisch als Schutzschicht für die TCO-Schicht. Eine solche amorphe, insbesondere röntgenamorphe Oxidschicht oder Nitridschicht zeichnet sich dadurch aus, dass in Röntgen-Beugungsspektren keine scharfen Interferenzen auftreten, die sich deutlich, insbesondere um mehr als 10% des durchschnittlichen Untergrundsignals hervorheben. Stattdessen sind allenfalls diffuse Interferenzen bei kleinen Beugungswinkeln vorhanden.

In besonders bevorzugter Ausgestaltung ist das Oxid der ersten Schicht ein Zinkoxid und/oder das Oxid- oder Nitrid der zweiten Schicht ein Aluminiumoxid oder -silicat oder - nitrid, im letzteren Falle besonders bevorzugt ein Silizium-Aluminium-Nitrid. Das Zinkoxid der ersten Schicht ist bevorzugt mit Aluminium, Gallium oder Molybdän dotiert.

Selbstverständlich können auch zwei oder auch alle drei der vorstehend genannten Dotanten kombiniert eingesetzt und in der Schicht vorhanden sein. Besonders bevorzugt ist die zweite Schicht eine Aluminiumsilikatschicht, insbesondere in einem Bereich von 0 bis zu 95 Gewichtsprozent Silizium am Gesamtmassenanteil von Aluminium und Silizium, als AlSiOx besonders bevorzugt mit einem Verhältnis von Al zu Si zwischen 60 zu 40 Gewichtsprozent bis 40 zu 60 Gewichtsprozent.

Hinsichtlich der Herstellung wird die erste Schicht durch eine Vakuumbeschichtung, bevorzugt durch eine physikalische Gasphasenabscheidung, besonders bevorzugt durch Sputtern aufgebracht. In gleicher Weise wird die zweite Schicht auf der ersten Schicht aufgebracht. Für das Sputtern wird vorzugsweise Magnetron-Sputtern eingesetzt.

Die erste Schicht weist eine Schichtdicke vorzugsweise im Bereich von 200 nm bis 2 µm auf, bevorzugt zwischen 200 und 600 nm, besonders bevorzugt zwischen 300 und 500 nm. Die abdeckende zweite Schicht kann vergleichsweise dünner sein. Bevorzugt werden Schichtdicken im Bereich von 10 bis 300 nm, weiter bevorzugt von 20 bis 150 nm, besonders bevorzugt zwischen 40 und 100 nm. Außerdem ist die erste Schicht gemäß einer Ausführungsform der Erfindung dadurch gekennzeichnet, dass sie bevorzugt eine kristalline Struktur aufweist, besonders bevorzugt eine kolumnare kristalline Struktur mit einer Korngrößenverteilung von 10 bis 200 nm, bevorzugt 20 bis 150 nm, besonders bevorzugt von 30 bis 120 nm.

In noch weiterer vorteilhafter Ausgestaltung ist auf zumindest einer der Scheiben vor der Beschichtung eine Zwischenschicht als zusätzliche Barrierebeschichtung aufgebracht. Hierdurch wird vermieden, dass Bestandteile der Scheibe in die Beschichtung oder umgekehrt diffundieren, z.B. eine Diffusion von Alkaliionen. Die Zwischenschicht ist also zwischen der Scheibe und den beiden anderen, zuvor beschriebenen Beschichtungen aufgebracht.

Diese Zwischenschicht ist bevorzugt eine aluminiumhaltige und/oder siliziumhaltige Schicht, insbesondere mit 0 bis zu 95 Gewichtsprozent Silizium am Gesamtmassenanteil von Aluminium und Silizium, bevorzugt eine Oxidschicht oder besonders bevorzugt eine Nitridschicht, insbesondere eine Silizium-Aluminium-Nitridschicht.

Vorteilhafterweise ist die jeweilige Scheibe des Kaminofens eine Glas- oder Glaskeramikscheibe. Diese kann den Temperaturen im Kaminofen standhalten und eignet sich für die oben genannte Beschichtung. Als Glas- oder Glaskeramikscheibe eignen sich beispielsweise Gläser aus der Familie der Alumo-Silikatgläser oder Kalk-Natron-Gläser. Besonders bei Verwendung von Kalk-Natron-Gläsern (Sodalime) kommt als Zwischenschicht bevorzugt eine Silizium-Aluminium-Nitridschicht mit dem Zusammensetzungsbereich Si70-95A130-5N in Betracht. Bei Alumo-Silikatgläsern (wie beispielsweise Robax) hat sich der Zusammensetzungsbereich A160-90Si40-10N als besonders geeignet herausgestellt.

Von besonderem Vorteil ist die beschriebene Beschichtung zur Vermeidung der Verrußung auch bei einem Kaminofen nach einem der vorhergehenden Ansprüche, bei dem zumindest zwei, besonders bevorzugt drei Seiten der Mantelfläche eine Scheibe aufweisen. Grade derartige mehrseitig verglaste Kaminöfen sind nämlich einer erhöhten Verrußungsneigung ausgesetzt.

Von ganz besonderem Vorteil ist die beschriebene Beschichtung zur Vermeidung der Verrußung in diesem Fall, wenn der Kaminofen eine im Querschnitt rechteckige Mantelfläche aufweist und die Scheiben plan, d.h. eben sind. Bei derartigen planen Scheiben sind nämlich die Randbereiche der Scheibe weiter vom Zentrum der Brennkammer entfernt. Durch diesen höheren Abstand ist hier die Verrußungsneigung besonders hoch, was durch die beschriebene Beschichtung verhindert wird.

Weiterhin ist die beschriebene Beschichtung zur Vermeidung der Verrußung auch bei einem Kaminofen von besonderem Vorteil, der zur Verbrennung von Gas ausgebildet ist. Von ganz besonderem Vorteil ist die beschriebene Beschichtung bei einem Kaminofen, der zur Verbrennung von Scheitholz ausgebildet ist.

Die letztgenannten vorteilhaften Weiterbildungen entfalten unter Umständen die genannten besonderen Vorteile hinsichtlich der Vermeidung der Verrußung auch bei Kaminöfen, deren transparente Fläche 25 % nicht überschreitet. Derartige Kaminöfen können daher auch explizit mittels eines unabhängigen Patentanspruches beansprucht werden. Offenbart werden daher auch folgende weiteren unabhängigen Ausführungsformen:
Ein Kaminofen zur Verbrennung von fossilen und/oder biogenen Brennstoffen, umfassend eine bis auf Lufteintrittsöffnungen und einen Anschluss an ein Ofenrohr geschlossene Brennkammer, wobei die Brennkammer eine Mantelfläche aufweist, und bei dem zumindest zwei, besonders bevorzugt drei Seiten der Mantelfläche eine Scheibe aufweisen, wobei zumindest eine der Scheiben auf ihrer Außenseite mit einer Beschichtung versehen ist, welche derart beschaffen ist, dass die integrale Intensität der Wärmestrahlung, die hinter der Scheibe außerhalb des Brennraumes gemessen werden kann, über die gesamte Fläche der Scheibe weniger als 50 %, bevorzugt weniger als 35 % der maximalen Wärmestrahlung beträgt, die von der Brennkammer des Kaminofens durch eine unbeschichtete Scheibe hindurch abgegeben werden kann.

Ein Kaminofen zur Verbrennung von fossilen und/oder biogenen Brennstoffen, umfassend eine bis auf Lufteintrittsöffnungen und einen Anschluss an ein Ofenrohr geschlossene Brennkammer, wobei die Brennkammer eine Mantelfläche aufweist, wobei die Brennkammer eine Mantelfläche aufweist, die teilweise aus einer Anzahl von transparenten Scheiben gebildet ist, wobei der Kaminofen zur Verbrennung von Gas ausgebildet ist, und wobei zumindest eine der Scheiben auf ihrer Außenseite mit einer Beschichtung versehen ist, welche derart beschaffen ist, dass die integrale Intensität der Wärmestrahlung, die hinter der Scheibe außerhalb des Brennraumes gemessen werden kann, über die gesamte Fläche der Scheibe weniger als 50 %, bevorzugt weniger als 35 % der maximalen Wärmestrahlung beträgt, die von der Brennkammer des Kaminofens durch eine unbeschichtete Scheibe hindurch abgegeben werden kann.

Ein Kaminofen zur Verbrennung von fossilen und/oder biogenen Brennstoffen, umfassend eine bis auf Lufteintrittsöffnungen und einen Anschluss an ein Ofenrohr geschlossene Brennkammer, wobei die Brennkammer eine Mantelfläche aufweist, wobei die Brennkammer eine Mantelfläche aufweist, die teilweise aus einer Anzahl von transparenten Scheiben gebildet ist, wobei der Kaminofen zur Verbrennung von Scheitholz ausgebildet ist, und wobei zumindest eine der Scheiben auf ihrer Außenseite mit einer Beschichtung versehen ist, welche derart beschaffen ist, dass die integrale Intensität der Wärmestrahlung, die hinter der Scheibe außerhalb des Brennraumes gemessen werden kann, über die gesamte Fläche der Scheibe weniger als 50 %, bevorzugt weniger als 35 % der maximalen Wärmestrahlung beträgt, die von der Brennkammer des Kaminofens durch eine unbeschichtete Scheibe hindurch abgegeben werden kann.

Die drei oben beschriebenen unabhängigen Ausführungsformen können wiederum mit einer der zuvor beschriebenen vorteilhaften Ausführungsformen kombiniert werden.

Die mit der Erfindung erzielten Vorteile bestehen insbesondere darin, dass durch eine die Wärmestrahlung zu über 50%, noch besser mehr als 65 % abschirmende Beschichtung auf einer Glas- oder Keramikglasscheibe eines Kaminofens eine Verrußung sicher vermieden wird und dadurch über nahezu die gesamte Abbranddauer eine uneingeschränkte Sichtbarkeit auf das Feuer ermöglicht wird. Dies wird dadurch erreicht, dass die Wärmestrahlung reflektierende Beschichtung eine homogenisierte Verteilung des Temperaturniveaus auf der Scheibe schon in der Anzündphase gewährleistet.

Ausführungsbeispiele der Erfindung werden anhand von Zeichnungen näher erläutert. Darin zeigen:
- FIG 1: schematisch einen Schnitt durch einen Kaminofen,
- FIG 2: einen Querschnitt durch eine beschichtete, Verrußung vermeidende Kaminofenscheibe,
- FIG 3: eine Infrarotaufnahme einer derartigen Kaminofenscheibe während des Anheizens,
- FIG 4: eine Abbildung der Verrußung verschiedener Kaminofenscheiben nach Anheizvorgängen.

Gleiche Teile sind in allen Zeichnungen mit denselben Bezugszeichen versehen.

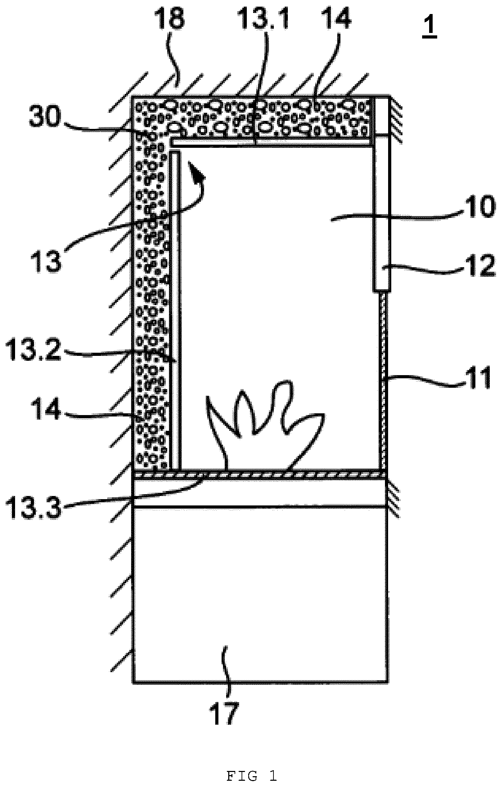

FIG 1 zeigt einen Schnitt durch einen Kaminofen 1, wie er typischerweise im Wohnbereich/in Wohninnenräumen zum Einsatz kommt. Dieser Kaminofen 1 weist eine Brennkammer 10 auf, die von einer Brennkammerverkleidung 13 umgeben ist. Frontseitig umfasst die Wandung der Brennkammer 10 eine Sichtscheibe 11 aus Glaskeramik oder Glasmaterial, die in eine nicht näher dargestellte Tür integriert ist, durch die hindurch die Brennkammer 10 zugänglich ist. Oberhalb der Scheibe 11 ist eine Frontverkleidung 12 vorgesehen, die von einem Schamottstein oder einem Gusseisenmaterial gebildet sein kann.

Die Brennkammerverkleidung 13 ist kubusformig angeordnet. Dementsprechend sind eine deckseitige Platte 13.1, eine Rückwand 13.2, ein Boden 13.3 und zwei vertikale, in der Schnittzeichnung nicht dargestellte Seitenwände vorgesehen. Auch in den Seitenwänden sind nicht dargestellte Scheiben aus Glas oder Glaskeramik eingelassen. Alle Teile außer Boden 13.3 und Platte 13.1 bilden zusammen die Mantelfläche der Brennkammer 10. Im Ausführungsbeispiel sind etwa 75% der Mantelfläche durch Scheiben 11 gebildet, der Kaminofen 1 ist also großflächig verglast. Drei der vier Seiten der im Querschnitt rechteckigen Mantelfläche sind mit Scheiben 11 versehen.

Die deckseitige Platte 13.1 und die Rückwand 13.2 sind parallel beabstandet zu Wandelementen 18 des Kaminofens 1 aufgestellt. Auf diese Weise ergibt sich ein Zwischenraum 14. Der Boden 13.3 steht parallel beabstandet zu einer Begrenzungswand eines Sockels 17. Auf diese Weise wird zwischen dem Boden 13.3 und der Begrenzungswand ein Zwischenraum 14 gebildet, der mit einem Dämmmaterial 30 ausgefüllt ist. Die Brennkammer 10 ist somit im Wesentlichen geschlossen und ausschließlich durch nicht näher dargestellte Lufteintrittsöffnungen mit dem Außenraum verbunden. Zudem ist ein nicht näher dargestellter Anschluss an ein Ofenrohr vorhanden.

Während des Betriebes des Ofens entsteht in der Brennkammer 10 ein Feuer, welches in Ausführungsbeispielen mittels Gas oder Scheitholz als Brennstoff betrieben wird. Insbesondere in der Anfangsphase der Verbrennung ist die Temperatur in der Brennkammer 10 dabei aber noch vergleichsweise niedrig, so dass bei der Verbrennung Ruß anfällt, der auch nach der Anfangsphase nicht mehr abgebaut wird. Dieser Ruß schlägt sich auf den Scheiben 11 des Kaminofens 1 nieder.

Überraschenderweise hat sich gezeigt, dass dieses Problem dadurch gelöst werden kann, dass die Glas- oder Glaskeramikscheiben 11 auf der der Brennkammer 10 abgewandten Oberfläche mit einer Beschichtung versehen sind, die dazu führt, dass die integrale Intensität der Wärmestrahlung, die hinter der Scheibe außerhalb des Brennraumes gemessen werden kann, über die gesamte Fläche der Scheibe weniger als 50 %, in einzelnen Ausführungsbeispielen sogar weniger als 35 % der maximalen Wärmestrahlung beträgt, die von der Brennkammer 10 des Kaminofens 1 bzw. der Feuerstätte abgegeben werden kann.

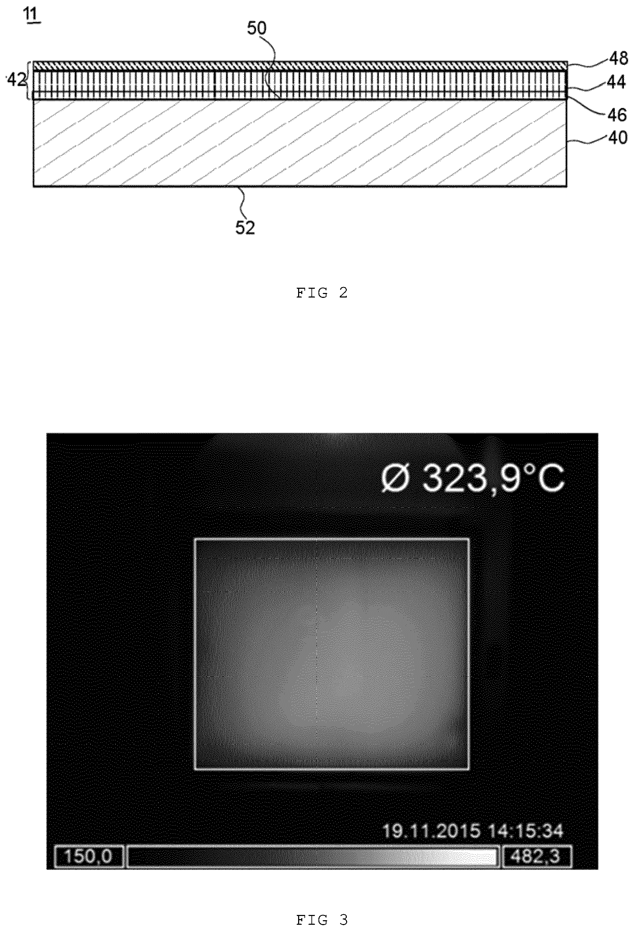

Eine derartige Beschichtung ist in FIG 2 dargestellt. Die Scheibe 11 umfasst eine 4 mm dicke transparente Glaskeramik-Sichtscheibe 40. Alternativ kann auch ein Glas vorgesehen sein. Die Glaskeramik-Sichtscheibe 40 umfasst bezogen auf die Brennkammer 10 eine Außenseite 50 und eine Innenseite 52. Auf der Außenseite ist nun die im Folgenden beschriebene Beschichtung 42 aufgebracht.

Die Beschichtung 42 umfasst eine erste Schicht 44 und eine die erste Schicht 44 abdeckenden, dementsprechend nach außen weisende zweiten Schicht 48. Als erste Schicht 44 dient ein transparentes leitfähiges Oxid (TCO), dessen Leitfähigkeit durch eine Dotierung erhöht ist, besonders bevorzugt Zinkoxid. Als Dotand werden Metalle verwendet, bevorzugt Gallium oder Molybdän, besonders bevorzugt aber Aluminium verwendet.

Ohne Beschränkung auf spezielle Ausführungsbeispiele liegt der Gehalt des Dotanden in der TCO-Schicht zur Herstellung einer hinreichenden Reflektivität im infraroten Spektralbereich bevorzugt zwischen 0,2 % und 10 %, bevorzugt zwischen 0,5 % und 6 %, besonders bevorzugt zwischen 0,5 % und 3 %. Für Aluminium werden dabei Gehalte ab 1% bevorzugt, besonders bevorzugt Gehalte zwischen 1 % und 2 %. Für Gallium und Molybdän werden dabei Gehalte ab 1,5 % bevorzugt, besonders bevorzugt Gehalte zwischen 2 % und 6 %. Jedenfalls wird die Menge des Dotanden gemäß einer weiteren Ausführungsform der Erfindung so gewählt, dass der Flächenwiderstand der ersten Schicht zwischen 5 Ω und 50 Ω liegt, bevorzugt zwischen 10 und 20 Ω, besonders bevorzugt höchstens 17 Ω /sqr beträgt. Damit wird eine gute Transparenz im sichtbaren Spektralbereich bei gleichzeitig hoher Infrarot-Reflektivität erreicht.

Die zweite Schicht 48 des Beschichtungsverbunds kann eine Oxidschicht sein, besonders bevorzugt eine Aluminiumoxidschicht. Die Oxidschicht muss nicht notwendigerweise rein sein, d. h. ausschließlich aus Sauerstoff und dem entsprechend Metall oder Halbmetall bestehen. Denkbar ist auch eine Mischoxidschicht, die neben dem Oxid in geringerem Maße auch ein oder mehrere andere Oxide enthält. Gedacht ist insbesondere auch an silikatische Bestandteile oder eine siliziumhaltige Oxidschicht. Besonders bevorzugt sind hier Aluminiumsilikatschichten oder siliziumhaltige Oxidschichten. Es hat sich überraschend gezeigt, dass eine aluminiumhaltige Schicht eine sehr gute Passivierungswirkung aufweist. Das zeigt sich dergestalt, dass die vorhandene Leitfähigkeit der TCO-Schicht ohne zweite Schicht nach einer kurzen Temperaturbehandlung signifikant steigt.

Zusätzlich zur Passivierungswirkung hat die zweite Schicht auch die Funktion einer Oxidationsschutzschicht. Ohne eine solche Schicht kann die TCO-Schicht, beziehungsweise die erste Schicht bei hohen Temperaturen weiter oxidieren, was insbesondere sehr schnell bei der Anwesenheit von Feuchtigkeit und einer dann stattfindenden Hydrolyse der Fall ist. Diese Oxidation führt zu einer schnellen Abnahme der Leitfähigkeit und damit auch der Reflektivität für Infrarotlicht, da durch die Oxidation weitere Defektzentren generiert werden, an welchen die für die Leitfähigkeit verantwortlichen freien Ladungsträger rekombinieren können.

Eine Passivierung ist insbesondere bei der bevorzugten Schichtdicke der zweiten Schicht im Bereich von 20 bis 150 nm keineswegs selbstverständlich, sondern tatsächlich auf die Anwesenheit von metallischen Anteilen des Reaktionspartners der Oxidschicht, besonders bevorzugt im Falle von Aluminiumoxid auf metallisches Aluminium zurückzuführen. So ist es beispielsweise aus der Halbleiter-Industrie bekannt, SiO2 als Passivierungsschicht zu verwenden. Es hat sich aber gezeigt, dass eine SiO2-Schicht als zweite Schicht keine dauerhafte Passivierung bewirkt, sondern eine derart abgedeckte TCO-Schicht ebenso wie eine nicht abgedeckte TCO-Schicht schnell degradiert.

Alternativ ist die zweite Schicht 48 der Infrarot reflektierenden Beschichtung 42 eine röntgenamorphe Nitridschicht, bevorzugt eine aluminiumhaltige Nitridschicht, besonders bevorzugt eine Silizium-Aluminium-Nitridschicht.

Für die optischen Eigenschaften der Beschichtung 5 ist es weiterhin allgemein günstig, wenn der Brechungsindex der zweiten Schicht 48 kleiner ist als der Brechungsindex der ersten Schicht 44. Durch den Brechungsindex-Unterschied mit einer oberen, niedrigbrechenden Lage kann zusätzlich eine Entspiegelungswirkung erzielt werden. Es wird ein Unterschied der Brechungsindizes von erster und zweiter Schicht von mindestens 0,1 bevorzugt, besonders bevorzugt ein Unterschied von mindestens 0,13. In einer bevorzugten Ausführungsform weist Aluminiumoxid einem Brechungsindex von etwa 1,7 als zweite Schicht 9 auf und die TCO-Schicht, besonders bevorzugt Zinkoxid der ersten Schicht 7, einen Brechungsindex von etwa 1,9.

Im Falle einer Nitridschicht als zweiter Schicht 48 kann der Brechungsindex der zweiten Schicht allerdings auch höher sein, als der Brechungsindex der ersten Schicht.

Darüber hinaus ist in der in FIG 2 gezeigten bevorzugten Ausführungsform auf der Außenseite 50 der Glas- oder Glaskeramikscheibe 40 eine Zwischenschicht 46 aufgebracht als zusätzliche Barrierebeschichtung zu der daraufliegenden ersten Schicht 44 und der die erste Schicht 44 abdeckenden, dementsprechend nach außen weisenden zweiten Schicht 48.

Die Zwischenschicht 46 ist bevorzugt eine aluminiumhaltige und/oder siliziumhaltige Schicht, weiter bevorzugt eine Oxidschicht oder besonders bevorzugt eine Nitridschicht, insbesondere eine Silizium-Aluminium-Nitridschicht. Die Zwischenschicht 46 fungiert bevorzugt als Diffusionsbarriere zwischen dem Glas 40 und der ersten Schicht 44 aus einem transparenten leitfähigen Oxid, bevorzugt einem dotierten TCO, besonders bevorzugt einem dotierten Zinkoxid. Gerade im Fall einer Beschichtung als letzten Prozessschritt ohne einen thermischen Vorspannprozess zeigt die nitridische Barriere eine bessere chemische Beständigkeit als die oxidische Barriere.

FIG 3 zeigt ein Wärmebild einer wie zu FIG 2 beschriebenen Scheibe 11 bei einer Durchschnittstemperatur von 323,9 °C. Wie sich zeigt, sorgt die oben beschriebene Beschichtung 42 dafür, dass sich die Verteilung eines für die Entrußung günstigen Temperaturniveaus auf der Scheibenfläche durch den Einsatz der Beschichtung 42 flächendeckend homogenisiert, sodass eine Verrußung der Scheibe nicht mehr auftritt.

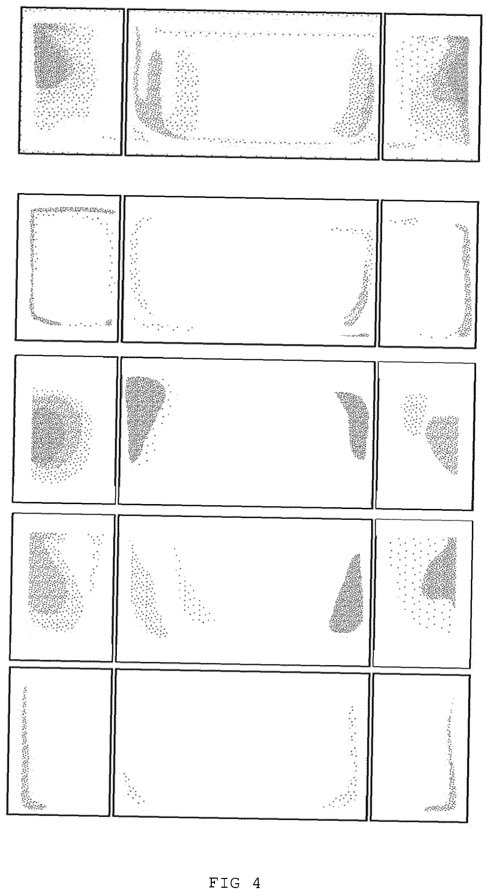

In diesem Zusammenhang wurde die oben beschriebene Beschichtung 42 mit einer anderen, schwächer Infrarot reflektierenden Beschichtung vergleichend bewertet. Bei der Vergleichsbeschichtung handelt es sich um eine einschichtige Antimon-Zinnoxid-Beschichtung. Einzelne Ergebnisse sind in FIG 4 dargestellt. Hierbei wurden jeweils Front und Seitenscheiben eingesetzt und der Kaminofen 1 betrieben. Alle Scheiben sind aus einer transparenten Glaskeramik und sind auf weißem Hintergrund in FIG 4 abgebildet, dabei sind von oben nach unten gezeigt:
- Vergleichsbeschichtung auf 4 mm starker Glaskeramik,
- oben beschriebene Beschichtung auf 5 mm starker Glaskeramik mit einem ersten Heizeinsatz,
- unbeschichtete Glaskeramik, betrieben mit dem ersten Heizeinsatz,
- unbeschichtete Glaskeramik, betrieben mit einem zweiten Heizeinsatz,
- oben beschriebene Beschichtung auf 5 mm starker Glaskeramik, betrieben mit dem zweiten Heizeinsatz.

Bei den abgebildeten Scheiben handelt es sich von links nach rechts jeweils um eine erste Seitenscheibe, eine Frontscheibe und eine zweite Seitenscheibe eines Kaminofens. Die Seitenscheiben haben dabei ein Format von 388 x 262 mm, die Frontscheibe ein Format von 670 x 388 mm.

Hierbei zeigt sich, dass insbesondere bei einem 3-seitig verglasten Kaminofen 1 mit hohem Anteil verglaster Mantelfläche, d.h. von mehr als 50 %, nur die mit der der stark Infrarot reflektierenden Beschichtung versehenen Scheiben zu einer weitgehend rußfreien Scheibeninnenseite führen.

Die hierfür relevante Eigenschaft der Infrarotreflexion wurde mittels eines im IR Wellenlängenbereich sensitiven Leistungsmessgeräts (Firma Gentec-eo, Typ UP55N) gemessen. Die Effizienz der Beschichtung berechnet sich dabei aus dem Verhältnis der Wärmemenge, die von einer konstant eingestellten Heizquelle (bspw. Schwarzkörperstrahler) durch eine unbeschichtete Scheibe hindurch im Vergleich zu einer beschichteten Scheibe gemessen wird.

Im Ergebnis zeigt sich, dass bei der Vergleichsbeschichtung die integrale Intensität der Wärmestrahlung, die hinter der Scheibe außerhalb des Brennraumes gemessen werden kann, über die gesamte Fläche der Scheibe immer noch 60-70% der maximalen Wärmestrahlung beträgt, die von der Brennkammer des Kaminofens durch eine unbeschichtete Scheibe hindurch abgegeben werden kann. Die oben beschriebene Beschichtung hingegen führt dazu, dass dieser Wert nur noch 35-45 % beträgt. Mit den Ergebnissen der Versuche nach FIG 4 ergibt sich somit, dass eine Reduktion der Wärmestrahlung von über 50 % erforderlich ist, um eine Verrußung ausreichend zu vermeiden, eine absolut vollständige Verhinderung der Verrußung ist erst ab einer Reduktion von 65 % zu erwarten.

### Bezugszeichenliste

- 1: Kaminofen
- 10: Brennkammer
- 11: Scheibe
- 12: Frontverkleidung
- 13: Brennkammerverkleidung
- 13.1: Platte
- 13.2: Rückwand
- 13.3: Boden
- 14: Zwischenraum
- 17: Sockel
- 18: Wandelement
- 40: Glaskeramik-Sichtscheibe
- 42: Beschichtung
- 44: erste Schicht
- 46: Zwischenschicht
- 48: zweite Schicht
- 50: Außenseite
- 52: Innenseite

## Patentansprüche

1. Kaminofen (1) zur Verbrennung von fossilen und/oder biogenen Brennstoffen, umfassend eine bis auf Lufteintrittsöffnungen und einen Anschluss an ein Ofenrohr geschlossene Brennkammer (10), wobei die Brennkammer (10) eine Mantelfläche aufweist, die zu mindestens 25 % aus einer Anzahl von transparenten Scheiben (11) gebildet ist,
wobei zumindest eine Scheibe (11) der Anzahl von Scheiben (11) auf ihrer Außenseite (50) mit einer Beschichtung (42) versehen ist, welche derart beschaffen ist, dass die integrale Intensität der Wärmestrahlung, die hinter der Scheibe außerhalb des Brennraumes gemessen werden kann, über die gesamte Fläche der Scheibe weniger als 50 %, bevorzugt weniger als 35 % der maximalen Wärmestrahlung beträgt, die von der Brennkammer des Kaminofens durch eine unbeschichtete Scheibe hindurch abgegeben werden kann.

2. Kaminofen (1) nach dem vorhergehenden Anspruch, bei dem die Mantelfläche zu mehr als 40 %, bevorzugt mehr als 50 %, besonders bevorzugt mehr als 60 % aus der Anzahl von transparenten Scheiben (11) gebildet ist.

3. Kaminofen (1) nach einem der vorhergehenden Ansprüche, wobei die Beschichtung (42) eine erste Schicht (44) auf der Außenseite und eine zweite Schicht (48) umfasst, welche auf der ersten Schicht (44) aufgebracht ist, und wobei die erste Schicht ein dotiertes transparentes leitfähiges Oxid und die zweite Schicht ein röntgenamorphes Oxid oder Nitrid umfasst.

4. Kaminofen (1) nach einem der vorhergehenden Ansprüche, wobei das Oxid der ersten Schicht (44) ein Zinkoxid ist und/oder das Oxid oder Nitrid der zweiten Schicht (48) ein Aluminiumoxid oder -nitrid.

5. Kaminofen (1) nach einem der vorhergehenden Ansprüche, bei dem auf zumindest einer der Scheiben (11) vor der Beschichtung (42) eine Zwischenschicht (46) als zusätzliche Barrierebeschichtung aufgebracht ist.

6. Kaminofen (1) nach dem vorhergehenden Anspruch, bei dem die Zwischenschicht (46) eine aluminiumhaltige und/oder siliziumhaltige Schicht ist, bevorzugt eine Oxidschicht oder besonders bevorzugt eine Nitridschicht, insbesondere eine Silizium-Aluminium-Nitridschicht.

7. Kaminofen (1) nach einem der vorhergehenden Ansprüche, bei dem die jeweilige Scheibe (11) eine Glas- oder Glaskeramikscheibe ist.

8. Kaminofen (1) nach einem der vorhergehenden Ansprüche, bei dem zumindest zwei, besonders bevorzugt drei Seiten der Mantelfläche eine Scheibe (11) aufweisen.

9. Kaminofen (1) nach dem vorhergehenden Anspruch, bei dem die Mantelfläche einen rechteckigen Querschnitt aufweist und die Scheiben (11) plan sind.

10. Kaminofen (1) nach einem der vorhergehenden Ansprüche, der zur Verbrennung von Gas ausgebildet ist.

11. Kaminofen (1) nach einem der vorhergehenden Ansprüche, der zur Verbrennung von Scheitholz ausgebildet ist.

12. Verwendung einer Scheibe (11) mit einer Beschichtung (42) in einer Mantelfläche der Brennkammer (10) eines Kaminofens (1) zur Vermeidung von Verrußung, wobei die Scheibe (11) auf ihrer Außenseite mit der Beschichtung (42) versehen wurde, und wobei die Beschichtung derart beschaffen ist, dass die integrale Intensität der Wärmestrahlung, die hinter der Scheibe außerhalb des Brennraumes gemessen werden kann, über die gesamte Fläche der Scheibe weniger als 50 %, bevorzugt weniger als 35 % der maximalen Wärmestrahlung beträgt, die von der Brennkammer des Kaminofens durch eine unbeschichtete Scheibe hindurch abgegeben werden kann.

13. Verwendung nach dem vorhergehenden Anspruch, wobei die Beschichtung eine erste Schicht (44) auf der Außenseite (50) und eine zweite Schicht (48) umfasst, welche auf der ersten Schicht (44) aufgebracht ist, und wobei die erste Schicht (44) ein dotiertes transparentes leitfähiges Oxid und die zweite Schicht (48) ein röntgenamorphes Oxid oder Nitrid umfasst.

14. Verwendung nach einem der vorhergehenden Verwendungsansprüche, wobei das Oxid der ersten Schicht (44) ein Zinkoxid ist und/oder das Oxid oder Nitrid der zweiten Schicht (48) ein Aluminiumoxid oder -nitrid.

15. Verwendung nach einem der einem der vorhergehenden Verwendungsansprüche, bei der auf zumindest einer der Scheiben (11) vor der Beschichtung (42) eine Zwischenschicht (46) als zusätzliche Barrierebeschichtung aufgebracht wird.

16. Verwendung nach dem vorhergehenden Anspruch, bei der die Zwischenschicht (46) eine aluminiumhaltige und/oder siliziumhaltige Schicht ist, bevorzugt eine Oxidschicht oder besonders bevorzugt eine Nitridschicht, insbesondere eine Silizium-Aluminium-Nitridschicht.
